# EUROPÄISCHE PATENTANMELDUNG

(11) **EP 3 168 495 A1**
(43) Veröffentlichungstag der Anmeldung: **17.05.2017**
(21) Anmeldenummer: 15194827.0
(22) Anmeldetag: 16.11.2015
(51) Int. Cl.: F16G 13/16, H02G 11/00

(54) **ENERGIEFÜHRUNGSKETTE MIT VERSTÄRKUNGSELEMENT**

(71) Anmelder: Tsubaki Kabelschlepp GmbH, 57482 Wenden-Gerlingen (DE)
(72) Erfinder: Rademacher, Falk, 51647 Gummersbach (DE)
(74) Vertreter: Neumann, Ditmar

(57) **Zusammenfassung**

Die erfindungsgemäße Energieführungskette (1) zum Führen von Leitungen, Kabeln, Schläuchen oder dergleichen zwischen einem ersten (2) und einem zweiten An-schlussbereich (3), die gelenkig miteinander verbundene Kettenglieder (5) aufweist, die parallele Laschen (8) und mindestens einen die Laschen (8) verbindenden Quersteg (9) aufweisen, wobei zumindest ein Teil der Kettenglieder (5) zwei Querstege (9) aufweist, zeichnet sich dadurch aus, dass die Energieführungskette (1) mindestens ein elastisches Verstärkungselement (14) aufweist, welches zumindest an einem Anschlussbereich (2, 3) oder mindestens einem Kettenglied (5) fixiert ist und welches sich über die Länge zumindest zweier Kettenglieder (5) erstreckt, von denen mindestens eines zwei Querstege (9) aufweist, wobei das Verstärkungselement (14) zumindest über einen Teil seiner Länge durch an Kettengliedern (5) angebrachte Halterungen (18) gelagert wird.

## Beschreibung

Gegenstand der vorliegenden Erfindung ist eine Energieführungskette mit einem elastischen Verstärkungselement, beispielsweise in Form eine Bandes oder Drahtes.

Energieführungsketten werden zum Führen von Leitungen, Kabeln, Schläuchen oder dergleichen zwischen einem ersten Anschlussbereich und einem zweiten Anschlussbereich eingesetzt. Sie weisen gelenkig miteinander und gegeneinander verschwenkbare Kettenglieder auf. Je nach den Umständen des Einsatzes der Energieführungskette, insbesondere abhängig von der Länge und Breite der Energieführungskette, von Steifigkeit und/oder Gewicht der geführten Leitungen, Kabeln oder Schläuche oder auch vom Eigengewicht oder der Positionierung der Anschlussbereiche kann die Formstabilität einer Energieführungskette, beispielsweise im Hinblick auf ihren Radius und/oder den seitlichen und/oder freitragenden Durchhang unbefriedigend sein.

Hiervon ausgehend liegt der vorliegenden Erfindung die Aufgabe zugrunde, die aus dem Stand der Technik bekannten Nachteile zumindest zu verringern und insbesondere eine Energieführungskette anzugeben, die im Hinblick auf ihre Form-stabilität verbessert ist.

Diese Aufgabe wird gelöst mit den Merkmalen der unabhängigen Ansprüche. Die abhängigen Ansprüche sind jeweils auf vorteilhafte Weiterbildungen gerichtet.

Die Energieführungskette zum Führen von Leitungen, Kabeln, Schläuchen oder dergleichen zwischen einem ersten und einem zweiten Anschlussbereich nach der vorliegenden Erfindung weist gelenkig miteinander verbundene Kettenglieder auf, die parallele Laschen und die Laschen verbindende Querstege aufweisen, wobei zumindest ein Teil der Kettenglieder zwei Querstege aufweist, und zeichnet sich dadurch aus, dass die Energieführungskette mindestens ein elastisches Verstärkungselement aufweist, welches zumindest an einem Anschlussbereich oder mindestens einem Kettenglied fixiert ist und welches sich über die Länge zumindest zweier Kettenglieder erstreckt, von denen mindestens eines zwei Querstege aufweist, wobei das Verstärkungselement zumindest über einen Teil seiner Länge durch an Kettengliedern angebrachte Halterungen gelagert, vorzugsweise beweglich gelagert, wird.

Die Energieführungskette nach der vorliegenden Erfindung zeichnet sich also dadurch aus, dass sie zumindest teilweise so genannte geschlossene Kettengliedern umfasst, die also zwei Laschen und zwei Querstege aufweisen, also so genannte geschlossene Kettenglieder aufweist. Insbesondere ist die Energieführungskette nach der vorliegenden Erfindung nicht so gestaltet, das das Verstärkungselement die Energieführungskette beziehungsweise die Kettenglieder an einer Seite abschließt. Die Energieführungskette kann durch die Verschwenkung benachbarter Kettenglieder gegeneinander bewegt werden, insbesondere abrollen.

Die Energieführungskette kann ihrer axialen Richtung und/oder radialer Richtung ein Verstärkungselement, aber auch mehrere Verstärkungselemente aufweisen. Unter einem elastischen Verstärkungselement wird ein Verstärkungselement aus einem elastischen Material verstanden, welches seine Form unter Krafteinwirkung verändert und bei Wegfall der einwirkenden Kraft in die Ausgangsform zurückkehrt und so eine Rückstellkraft ausüben kann. Durch den Einsatz mindestens eines elastischen Verstärkungselementes mit der entsprechenden Rückstellkraft kann eine Verbesserung der Formstabilität der Energieführungskette erreicht werden.

Wird beispielsweise ein Verstärkungselement eingesetzt, welches in entspannter Lage eine gekrümmte Form mit einem Radius kleiner oder gleich dem Radius der Energieführungskette aufweist, so wird das Aufspreizen des Kettenradius verhindert und gleichzeitig die freitragende Länge erhöht. Wird ein Verstärkungselement eingesetzt, welches in entspannter Lage eine plane Form oder einen im Vergleich zum Radius der Energieführungskette größeren Radius oder einen entgegengesetzt zur Energieführungskette gekrümmten Radius auf, so wird die Aufspreizung des Kettenradius unterstützt, ein unerwünschter Einfall der Energieführungskette wird vermieden. Der seitliche Durchhang der Energieführungskette kann durch das Zusammenwirken der Halterung(en) mit dem/den Verstärkungselementen reduziert werden, in dem die Halterung in der entsprechenden seitlichen Richtung nur unwesentlich größer ist als das Verstärkungselement. Soll ausschließlich der seitliche Durchhang vermieden werden, so ist es vorteilhaft, ein Band als Verstärkungslement einzusetzen, welches nur eine geringe Biegefestigkeit aufweist. Dadurch wird der Einfluss des Verstärkungselementes auf die Bildung des Kettenradius reduziert und gleichzeitig der seitliche Durchhang verringert.

Gemäß einer vorteilhaften Ausgestaltung umfasst die Energieführungskette mindestens eines der folgenden Verstärkungselemente:
a) ein elastisches Band; und
b) mindestens einen elastischen Draht.

Als Band kann insbesondere ein metallisches Band und/oder ein Kunststoffband eingesetzt werden. Der elastische Draht ist bevorzugt aus einem metallischen Werkstoff ausgebildet und insbesondere als Federdraht ausgebildet.

Bevorzugt können in einer Energieführungskette mindestens ein elastisches Band und mindestens ein elastischer Draht als elastische Verstärkungsmittel eingesetzt werden.

Gemäß einer vorteilhaften Ausgestaltung weisen die Kettenglieder in Bezug auf die Krümmung der Energieführungskette im Betrieb einen Außenbereich und einen Innenbereich auf, wobei mindestens ein Verstärkungselement an mindestens einer der folgenden Positionen der Kettenglieder ausgebildet ist:
a. am Außenbereich,
b. am Innenbereich oder
c. in der neutralen Faser.

Durch Ausbildung des mindestens einen Verstärkungselementes am Außenbereich, am Innenbereich und/oder in der neutralen Faser kann gezielt Einfluss auf die Formstabilität der Energieführungskette genommen werden. Die entsprechenden Rückstellkräfte können durch eine entsprechende Ausbildung des oder der Verstärkungselemente definiert werden, beispielsweise durch unterschiedliche Krümmungsradien der Verstärkungselemente im entspannten Zustand im Vergleich zum Radius der Energieführungskette, durch unterschiedliche Stärken der Verstärkungselemente und ähnliches.

Gemäß einer vorteilhaften Ausgestaltung ist das mindestens eine elastische Verstärkungselement federelastisch.

Unter federelastisch wird hierbei insbesondere verstanden, dass das Verstärkungselement ein linear-elastisches Verhalten zeigt, welches dem Hookeschen Gesetz folgt. Solche federeleatischen Verstärkungselemente sind einfach auszulegen, so dass eine genaue Anpassung an den notwendigen Anwendungsfall in der Energieführungskette erreicht werden kann.

Gemäß einer vorteilhaften Ausgestaltung ist das elastische Verstärkungselement aus einem metallischen Werkstoff oder Kunststoff ausgebildet.

Insbesondere metallische Werkstoffe wie beispielsweise Federstähle eignen sich gut, um Verstärkungselemente mit langer gleichbleibender Rückstellkraft auch nach intensivem Betrieb zu gestalten. Kunststoffwerkstoffe und insbesondere elastomere Werkstoffe erlauben eine genaue Definition der Eigenschaften des Verstärkungselements.

Die erfindungsgemäße Energieführungskette ist insbesondere in Verbindung mit Schiebetüren von großem Vorteil. Wird die Energieführungskette liegend angeordnet, das heißt die Trumme liegen in einer im wesentlichen horizontalen Ebene, so wird durch das elastische Verstärkungselement ein vordefinierter Krümmungsradius erreicht. Eine unkontrollierte Auslenkung der Energieführungskette wird durch das elastische Verstärkungselement verhindert. Die erfindungsgemäße Energieführungskette oder das erfindungsgemäße Schiebetürsystem mit einer solchen Energieführungskette benötigt keinen Führungskanal, was bei den bisher bekannten Lösungen notwendig ist.

Gemäß einem weiteren Aspekt der vorliegenden Erfindung wird ein Schiebetürensystem, insbesondere für ein Kraftfahrzeug, vorgeschlagen, umfassend mindestens eine Energieführungskette zum Führen von Leitungen, Kabeln, Schläuchen oder dergleichen zwischen einem ersten und einem zweiten Anschlussbereich, die gelenkig miteinander verbundene Kettenglieder aufweist, die parallele Laschen und die Laschen verbindende Querstege aufweisen, wobei zumindest ein Teil der Kettenglieder zwei Querstege aufweist, wobei die Energieführungskette mindestens ein elastisches Verstärkungselement aufweist, welches zumindest an einem Anschlussbereich oder mindestens einem Kettenglied fixiert ist und welches sich über die Länge zumindest zweier Kettenglieder erstreckt, von denen mindestens eines zwei Querstege aufweist, wobei das Verstärkungselement zumindest über einen Teil seiner Länge durch an Kettengliedern angebrachte Halterungen gelagert wird.

Gemäß einer vorteilhaften Ausgestaltung ist die Energieführungskette gemäß der vorliegenden Erfindung ausgebildet. Die für die erfindungsgemäße Energieführungskette offenbarten Details und Vorteile lassen sich auf das erfindungsgemäße Schiebetürensystem übertragen und anwenden und umgekehrt.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen schematisch:
- Fig. 1: eine Energieführungskette in drei Positionen in seitlicher Ansicht;
- Fig. 2 und 3: zwei Beispiele einer Energieführungskette in seitlicher Ansicht;
- Fig. 4 bis 6: drei Beispiele einer Energieführungskette in perspektivischer Ansicht; und
- Fig. 7 bis 9: ein weiteres Beispiel einer Energieführungskette in seitlicher Ansicht, Draufsicht und einen Schnitt des ensprechenden Beispiels; sowie
- Fig. 10 und 11: zwei perspektivische Ansichten eines entsprechenden Kettengliedes.

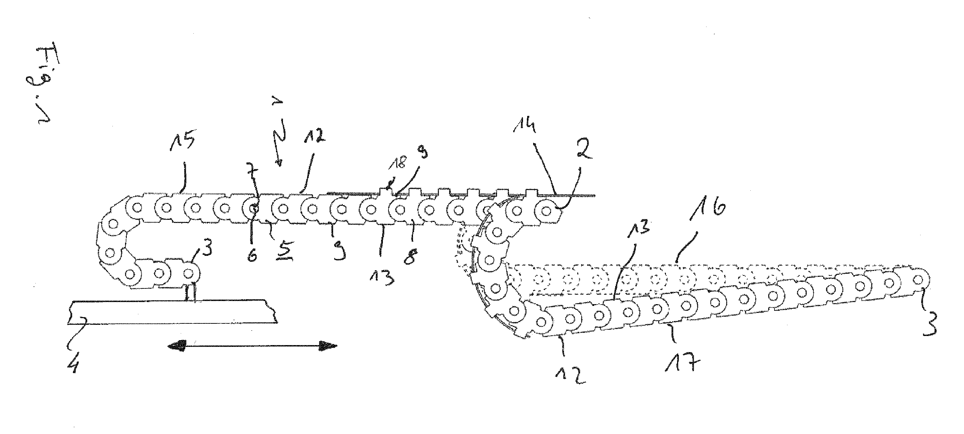

Fig. 1 zeigt schematisch eine Energieführungskette 1 zum Führen von Kabeln, Leitungen, Schläuchen und dergleichen in ihrem Inneren zwischen einem ersten Anschlussbereich 2 und einem zweiten Anschlussbereich 3, die in einer Schiebetür 4 für ein Kraftfahrzeug verbaut ist, in drei Positionen. Die Energieführungskette 1 ist aus einer Vielzahl von Kettengliedern 5 aufgebaut, die bevorzugt aus Kunststoff und insbesondere aus einem faserverstärkten Kunststoff ausgebildet sind. Benachbarte Kettenglieder 5 sind durch Zapfen 6 und entsprechende Bohrungen 7 miteinander verbunden, so dass benachbarte Kettenglieder 5 gegeneinander verschwenkbar sind, so dass sich der zweite Anschlussbereich 3 relativ zum ersten Anschlussbereich 2 bewegen kann.

Jedes Kettenglied 5 umfasst zwei zueinander parallele Laschen 8 und mindestens einen die beiden Laschen 8 verbindenden Quersteg 9 auf, wobei die Energieführungskette 1 nach der vorliegenden Erfindung zumindest teilweise aus Kettengliedern 5 mit zwei Querstegen 9, so genannten geschlossenen Kettengliedern 5, aufgebaut ist. Die Kettenglieder 5 weisen jeweils in Bezug auf die Krümmung der Energieführungskette 1 einen Außenbereich 12 und einen Innenbereich 13 auf. Bei Krümmung der Energieführungskette 1 liegen somit die Innenbereich 13 im Inneren der Krümmung, während die Außenbereiche 12 außen liegen. Die Kettenglieder 5 weisen entsprechende Anschläge auf, die die Auslenkung benachbarter Kettenglieder 5 begrenzen.

Die in Figur 1 gezeigte Energieführungskette 1 weist zwei unterschiedliche Arten von Kettengliedern 5 auf, zum einen sechs erste Kettenglieder 10 und eine Vielzahl von zweiten Kettengliedern 11, die sich in ihrem Außenbereich 12 unterscheiden. Die ersten Kettenglieder 10 weisen radial außen liegende Halterungen 18 auf. In diesen Halterungen 18 ist ein elastisches Verstärkungselement 14 vorzugsweise beweglich gelagert, welches im vorliegenden Beispiel als mindestens ein Draht aus Federstahl ausgebildet ist. Das elastische Verstärkungselement 14 ist im ersten Anschlussbereich 2 festgelegt und erstreckt sich je nach Position der Energieführungskette 1 über den Bereich der ersten Kettenglieder 10 hinaus.

Fig. 1 zeigt drei Positionen oder Auslenkungen der Energieführungskette 1, die unterschiedlichen Positionen der nur schematisch angedeuteten Schiebetür 2 eines Kraftfahrzeugs entsprechen. In einer ersten Position 15 ist das elastische Verstärkungselement 14 gestreckt, während es in einer zweiten Position 16 und einer dritten Position 17 gekrümmt ist.

Im vorliegenden Fall ist das elastische Verstärkungselement 14 so ausgebildet, dass es in entspannter Lage eine im wesentlichen plane Form aufweist. Dies entspricht der ersten Position 15 der Energieführungskette 1. Alternativ weist das elastische Verstärkungselement 14 einen Krümmungsradius auf, der größer als der Krümmungsradius der Energieführungskette 1 ist, oder das elastische Verstärkungselement 14 ist entgegengesetzt zur Energieführungskette 1 gekrümmt. Im vorliegenden Beispiel wirkt das elastische Verstärkungselement 14 bei der Bildung der Krümmung der Energieführungskette 1 dem Einfall der Energieführungskette 1 entgegen (siehe dritte Position 17, das Verstärkungselement 14 maximiert die Krümmung der Energieführungskette 1). Auch bei erhöhter Krafteinwirkung bewirkt die Elastizität des Verstärkungselementes 14 die Ausbildung des kleinstmöglichen Krümmungsradius (zweite Position 16), bei dem die Kettenglieder 5 im Bereich der Krümmung im Innenbereich an benachbarten Kettengliedern 5 anschlagen.

Alternativ ist es möglich, das elastische Verstärkungselement 14 so auszubilden, dass es in entspannter Lage eine gekrümmte Form mit einem Krümmungsradius kleiner oder gleich dem Krümmungsradius der Energieführungskette 1 aufweist, Damit unterstützt das Verstärkungselement 14 die Bildung des Biegeradius der Energieführungskette 1 und ermöglicht die Ausbildung längerer freitragender Energieführungsketten 1, ohne dass unterstützende Maßnahmen wie beispielsweise eine Führungsrinne für die Energieführungskette 1 nötig werden.

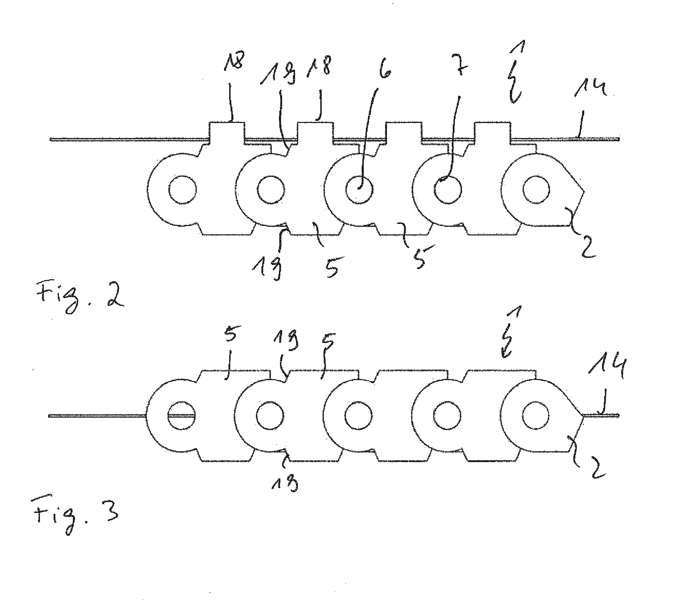

Fig. 2 und 3 zeigen seitliche Ansichten von zwei verschiedenen Beispielen von Teilen einer Energieführungskette 1. Im Beispiel aus Fig. 2 sind die Halterungen 18 an einem der Querstege 9 der Kettenglieder 5 angebracht. Je nach Ausbildung der Kettenglieder 5 und der Gestaltung der Energieführungskette 1 können die Halterungen 18 dann im Außenbereich 12 oder im Innenbereich 13 der Energieführungskette 1 ausgebildet sein, so dass das elastische Verstärkungselement 14 außen oder innen an der Energieführungskette 1 ausgebildet ist. Der Verschwenkbereich benachbarter Kettenglieder 5 ist dabei durch Anschläge 19 limitiert.

Fig. 3 zeigt ein Beispiel, bei dem das elastische Verstärkungselement 14 in der neutralen Faser der Energieführungskette 1 ausgebildet ist. Als neutrale Faser wird dabei die Lage der Energieführungskette 1 bezeichnet, in der keine Kräfte auf die eingebrachten Leitungen, Kabel, Schläuche oder dergleichen wirken. Wird das elastische Verstärkungselement 14 in der neutralen Faser ausgebildet, so kann es vorteilhaft an jedem Kettenglied 5, in dem es ausgebildet ist, befestigt sein. Wird das elastische Verstärkungselement 14 als elastisches Band ausgebildet und jeweils an den Enden der Energieführungskette 1 befestigt, so wird dadurch die Zugfestigkeit der Energieführungskette 1 erhöht.

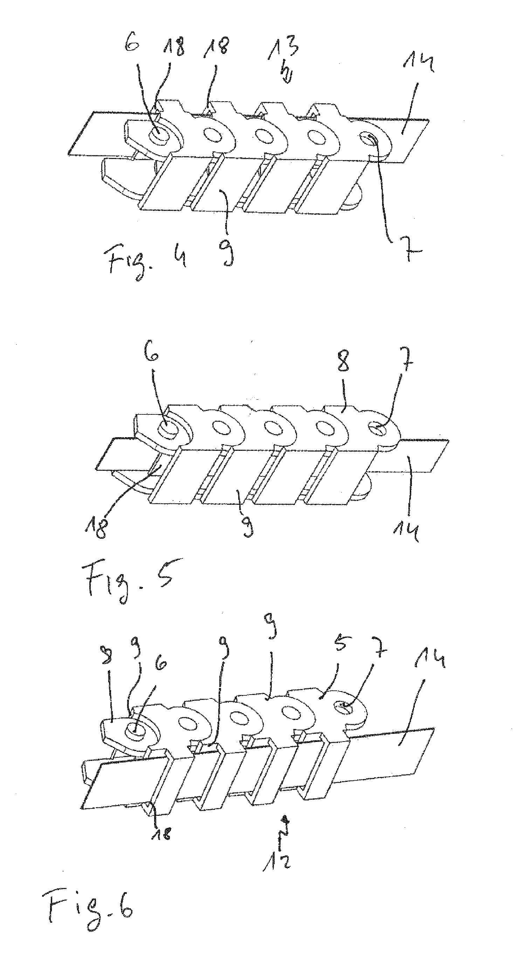

Die Fig. 4 bis 6 zeigen drei Beispiele von Teilen einer Energieführungskette 1. In diesen Beispielen ist das elastische Verstärkungselement 14 als elastisches Band ausgeführt. Im Beispiel von Fig. 4 ist das elastische Verstärkungselement 14 durch Halterungen 18 im Innenbereich 13 beweglich gelagert, während im Beispiel nach Fig. 6 diese Halterungen 18 im Außenbereich 12 der Kettenglieder 5 und der Energieführungskette 1 ausgebildet sind. Fig. 5 zeigt ein weiteres Beispiel, bei dem das elastische Verstärkungselement 14 in der neutralen Faser ausgebildet ist und dort durch entsprechende Halterungen 18 beweglich gelagert wird.

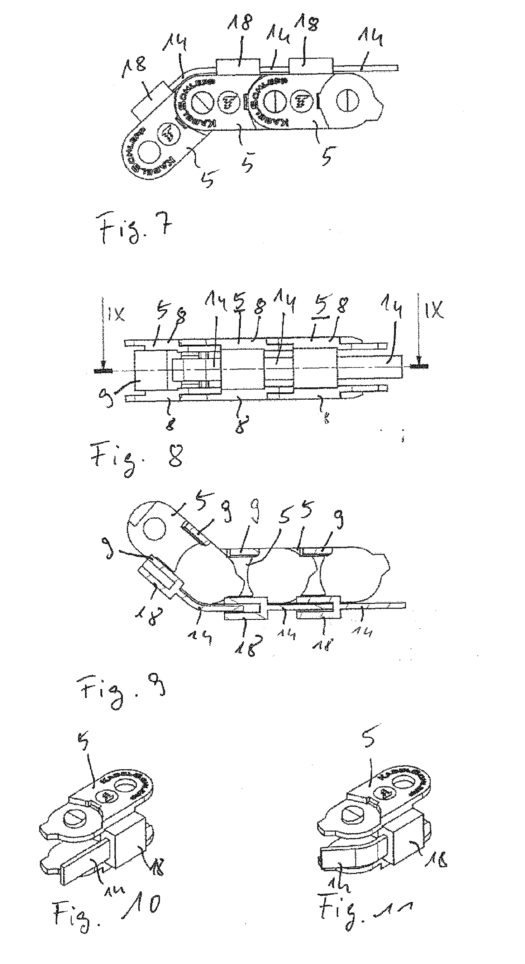

Fig. 7 bis 11 zeigen ein weiteres Beispiel für den Aufbau einer Energieführungskette 1 mit elastischen Verstärkungselementen 14. In diesem Beispiel sind mehrere elastische Verstärkungselemente 14 ausgebildet, wobei jedes dieser Verstärkungselemente 14 an einem Kettenglied 5 festgelegt ist und sich dann bis in eine Halterung 18 des benachbarten Kettengliedes 5 erstreckt (siehe hier insbesondere die Schnittansicht in Figur 9 gemäß der mit "IX-IX" bezeichneten Linie in Fig. 8. Die Halterungen 18 sind in diesem Beispiel außen an die Querstege 9 angeformt.

Wie insbesondere die Figuren 10 und 11 zeigen, kann das elastische Verstärkungselement 14 als im entspannten Zustand im wesentlichen planes Band (Fig. 10) und als im entspannten Zustand gekrümmtes Band (Fig. 11) ausgebildet sein. Je nach Ausdehnung der Halterung 18 in Breitenrichtung des als elastisches Verstärkungselement 14 dienenden Bandes im Vergleich zur Breite des Bandes kann durch das Verstärkungselement 14 kann die seitliche Durchbiegung der Energieführungskette 1 verringert werden.

### Bezugszeichenliste

- 1: Energieführungskette
- 2: erster Anschlussbereich
- 3: zweiter Anschlussbereich
- 4: Schiebetür
- 5: Kettenglied
- 6: Zapfen
- 7: Bolzen
- 8: Lasche
- 9: Quersteg
- 10: erstes Kettenglied
- 11: zweites Kettenglied
- 12: Außenbereich
- 13: Innenbereich
- 14: elastisches Verstärkungselement
- 15: erste Position
- 16: zweite Position
- 17: dritte Position
- 18: Halterung
- 19: Anschlag

## Patentansprüche

1. Energieführungskette (1) zum Führen von Leitungen, Kabeln, Schläuchen oder dergleichen zwischen einem ersten (2) und einem zweiten Anschlussbereich (3), die gelenkig miteinander verbundene Kettenglieder (5) aufweist, die parallele Laschen (8) und die Laschen (8) verbindende Querstege (9) aufweisen, wobei zumindest ein Teil der Kettenglieder (5) zwei Querstege (9) aufweist, **dadurch gekennzeichnet, dass** die Energieführungskette (1) mindestens ein elastisches Verstärkungselement (14) aufweist, welches zumindest an einem Anschlussbereich (2, 3) oder mindestens einem Kettenglied (5) fixiert ist und welches sich über die Länge zumindest zweier Kettenglieder (5) erstreckt, von denen mindestens eines zwei Querstege (9) aufweist, wobei das Verstärkungselement (14) zumindest über einen Teil seiner Länge durch an Kettengliedern (5) angebrachte Halterungen (18) gelagert wird.

2. Energieführungskette (1) nach Anspruch 1, bei der die Energieführungskette (5) mindestens eines der folgenden Verstärkungselemente (14) umfasst:
a) ein elastisches Band; und
b) mindestens einen elastischen Draht.

3. Energieführungskette (1) nach einem der vorhergehenden Ansprüche, bei der die Kettenglieder (5) in Bezug auf die Krümmung der Energieführungskette (1) im Betrieb einen Außenbereich (12) und einen Innenbereich (13) aufweisen, wobei mindestens ein Verstärkungselement (14) an mindestens einer der folgenden Positionen der Kettenglieder (5) ausgebildet ist:
a. am Außenbereich (12),
b. am Innenbereich (13) oder
c. in der neutralen Faser.

4. Energieführungskette (1) nach einem der vorhergehenden Ansprüche, bei der das mindestens eine elastische Verstärkungselement (14) federelastisch ist.

5. Energieführungskette (1) nach einem der vorhergehenden Ansprüche, bei der das elastische Verstärkungselement (14) aus einem metallischen Werkstoff oder Kunststoff ausgebildet ist.

6. Schiebetürensystem, insbesondere für ein Kraftfahrzeug, umfassend mindestens eine Energieführungskette (1) zum Führen von Leitungen, Kabeln, Schläuchen oder dergleichen zwischen einem ersten (2) und einem zweiten Anschlussbereich (3), die gelenkig miteinander verbundene Kettenglieder (5) aufweist, die parallele Laschen (8) und die Laschen (8) verbindende Querstege (9) aufweisen, wobei zumindest ein Teil der Kettenglieder (5) zwei Querstege (9) aufweist, wobei die Energieführungskette (1) mindestens ein elastisches Verstärkungselement (14) aufweist, welches zumindest an einem Anschlussbereich (2, 3) oder mindestens einem Kettenglied (5) fixiert ist und welches sich über die Länge zumindest zweier Kettenglieder (5) erstreckt, von denen mindestens eines zwei Querstege (9) aufweist, wobei das Verstärkungselement (14) zumindest über einen Teil seiner Länge durch an Kettengliedern (5) angebrachte Halterungen (18) gelagert wird.

7. Schiebetürensystem nach Anspruch 6, wobei die Energieführungskette (1) nach einem der Ansprüche 2 bis 5 ausgebildet ist.
